(19) Europäisches Patentamt
European Patent Office
Office européen des brevets

(11) EP 4 280 149 A1

(12) EUROPEAN PATENT APPLICATION

(43) Date of publication:
22.11.2023 Bulletin 2023/47

(21) Application number: 23159361.7

(22) Date of filing: 01.03.2023

(51) International Patent Classification (IPC):
G06Q 50/00 (2012.01)      G06Q 50/06 (2012.01)
F03D 7/02 (2006.01)        G06Q 10/04 (2023.01)
G06Q 20/20 (2012.01)       G06Q 40/00 (2023.01)
G06Q 40/03 (2023.01)       G06Q 40/04 (2012.01)

(52) Cooperative Patent Classification (CPC):
G06Q 10/04; F03D 7/0284; G06Q 20/203;
G06Q 40/00; G06Q 40/03; G06Q 40/04;
G06Q 50/00; G06Q 50/06

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 16.05.2022  JP 2022080274

(71) Applicant: Hitachi, Ltd.
Tokyo 100-8280 (JP)

(72) Inventors:
• UCHIGAITO, Hiroshi
Tokyo, 100-8280 (JP)
• TAKEMOTO, Takashi
Tokyo, 100-8280 (JP)
• OKAMOTO, Mamoru
Tokyo, 100-8280 (JP)
• KRASIENAPIBAL, Thantip Sirinabhigupta
Tokyo, 100-8280 (JP)

(74) Representative: MERH-IP Matias Erny Reichl
Hoffmann
Patentanwälte PartG mbB
Paul-Heyse-Strasse 29
80336 München (DE)

(54) **INVESTMENT DETERMINATION ASSISTANCE SYSTEM, AND INVESTMENT DETERMINATION ASSISTANCE METHOD**

(57)    It is provided an investment determination assistance system comprising: an input unit; a prediction unit configured to generate future forecast data; an environment simulation unit configured to simulate moves of the local energy system with use of a model representing behavior of an environment including the one or more grids, the past/present state data, and the future forecast data; a short-term operation evaluation unit configured to calculate a method of operating the one or more grids for optimizing daily power operation; and a long-term investment evaluation unit configured to output, with use of output from the prediction unit and the output from the environment simulation unit, a long-term investment evaluation result including an effect and a risk of investment for installing equipment in the one or more grids.

Fig. 2

**Description**

BACKGROUND OF THE INVENTION

This invention relates to an investment determination assistance system.

In order to suppress global warming, sustainable development in line with an objective in reducing greenhouse gas emission is desired. Power source ratios of renewable energy such as solar power and wind-generated power are accordingly required to be raised. Renewable energy, however, has great weather-induced fluctuations in power generation amount, and accordingly requires investment determination that takes into consideration a return on investment and risks such as power outage and disasters.

The background art in this technical field includes the following related art. In US 2002/0194113 A1, there are described a system, a method, and a computer program product for minimizing risks associated with meteorology dependent activity. Such activity may include operation of renewable power sources, and the delivery of power output from those renewable power sources for sale on a market. The system and method identify risks to market participants in the event of possible shortfall, and provide metrics and mitigation processes for addressing the risks before the contractual breaches occur for failure to deliver power, or imbalances occur in grid operations.

SUMMARY OF THE INVENTION

In capital investment for renewable energy, an expected value of an internal rate of return (IRR) is taken into consideration, and fluctuation ranges of various risks and frequencies of power outage in normal time as well as at the time of disaster are required to be evaluated. However, the above-mentioned system of the background art does not have a function for evaluating those risks and displaying evaluations. Particularly in a case in which a grid making use of renewable energy is operated without being coupled to a power system, and a solar power generation device, for example, yields a gain through power selling when the weather is clear but is depleted in power in foul weather, risk evaluation influences investment determination.

It is accordingly an object of this invention to provide an investment determination assistance system for evaluating risks in addition to an expected return on investment to an energy system, and displaying the expected return and the risks.

The representative one of inventions disclosed in this application is outlined as follows. There is provided an investment determination assistance system for presenting an effect of capital investment in a local energy system, the investment determination assistance system being configured from a computer including an arithmetic device for executing predetermined arithmetic processing and a storage device coupled to the arithmetic device, the local energy system including one or more grids and a vehicle in which a storage battery is installed, the one or more grids each including at least one of a power generation device or an electricity storage device, the investment determination assistance system comprising: an input unit implemented by the arithmetic device and configured to present choices of risk factors to be considered in a forecast to a user, and receive, from the user, selection of risk factors out of the presented risk factors and setting of an expected fluctuation range for each risk factor forming a part of the selected risk factors; a prediction unit implemented by the arithmetic device and configured to generate future forecast data by using, as input, past/present state data, the risk factors selected by the user, and the setting of the expected fluctuation range for each risk factor, the past/present state data including data of the one or more grids and surroundings of the one or more grids, and data about costs required for introduction, maintenance, and operation of the local energy system, the future forecast data including predicted data of the one or more grids and the surroundings of the one or more grids, and data about predicted costs predicted to be required for introduction, maintenance, and operation of the local energy system; an environment simulation unit implemented by the arithmetic device and configured to simulate moves of the local energy system with use of a model representing behavior of an environment including the one or more grids, the past/present state data, and the future forecast data; a short-term operation evaluation unit implemented by the arithmetic device and configured to calculate a method of operating the one or more grids for optimizing daily power operation, by using output from the environment simulation unit as input, and by using a short-term operation algorithm; and a long-term investment evaluation unit implemented by the arithmetic device and configured to output, with use of output from the prediction unit and the output from the environment simulation unit, a long-term investment evaluation result including an effect and a risk of investment for installing equipment in the one or more grids, wherein the long-term investment evaluation unit implemented by the arithmetic device is configured to: calculate the risk of the investment based on the risk factors selected by the user and the setting of the expected fluctuation range for at least one of the selected risk factors; and generate, based on the calculated risk, data for displaying a fluctuation range of the effect of the investment.

According to the at least one aspect of this invention, risks of investment to an energy system can accurately be evaluated. Problems, configurations, and effects other than those described above are revealed in the following description of at least one embodiment of this invention.

BRIEF DESCRIPTION OF THE DRAWINGS

FIG. 1 is a diagram for illustrating an outline of a local energy system to which investment determination by an investment determination assistance system according to an embodiment of this invention is applied.

FIG. 2 is a block diagram for illustrating a logical configuration of the investment determination assistance system according to the embodiment of this invention.

FIG. 3 is a block diagram for illustrating a logical configuration of the calculation and evaluation unit according to the embodiment of this invention.

FIG. 4 is a diagram for illustrating a physical configuration of the investment determination assistance system according to the embodiment according to the embodiment of this invention.

FIG. 5 is a flow chart of energy system investment determination assistance processing executed by the investment determination assistance system according to the embodiment of this invention.

FIG. 6 is a flow chart of calculation and evaluation processing executed by a calculation and evaluation unit according to the embodiment of this invention.

FIG. 7 is a flow chart of processing executed by an evaluation unit according to the embodiment of this invention.

FIG. 8 and FIG. 9 are diagrams for illustrating examples of an input screen according to the embodiment of this invention.

FIG. 10 to FIG. 13 are diagrams for illustrating an example of an output screen according to the embodiment of this invention.

DETAILED DESCRIPTION OF THE PREFERRED EMBODIMENTS

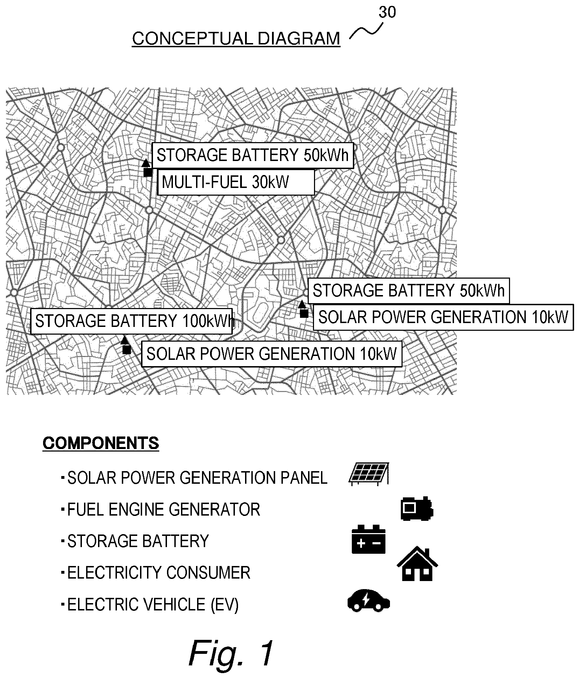

FIG. 1 is a diagram for illustrating an outline of a local energy system to which investment determination by an investment determination assistance system 100 according to at least one embodiment of this invention is applied.

The local energy system includes a plurality of grids. Each of the grids is coupled to a power management system (not shown) in a manner that allows communication. An electric vehicle may be run between the grids in order to interchange power between the grids without depending on a power system.

For example, each of the grids includes a power source for generating power (a solar power generation device, an engine generator, or the like), load devices which consume power, and a power control device (not shown) for controlling a power generation amount and power consumption. The grid may include a storage battery, which accumulates power, in order to fill a gap between power supply and demand for power. The power source is mainly a device that generates power from natural energy, such as solar power generation, wind power generation, and geothermal power generation, and an engine (internal combustion engine) generator may be installed in the grid. Examples of the load devices include machinery equipment, a hospital and other public institutions, and agricultural machinery which consume power in the grid. The electric vehicle running between the grids also consumes power.

The power management system is coupled in a manner that allows communication to and from the plurality of grids and load devices that belong to none of the grids. The power control device of each of the grids and a power control device of each of those load devices each send its own power supply-demand state and a request to transport freight or people to a control system. The control system sends an instruction to secure surplus power for charging of the electric vehicle, and sends a transport completion report got from the electric vehicle to the grid. The control system also outputs a calculation result to an administrator, and receives input of selection of an EV running schedule or the like from the administrator.

In a region including the grids, the electric vehicle, which is a vehicle running on electricity, travels between the grids with use of charged power. The electric vehicle is a delivery truck, an on-demand bus, a taxi, or the like which transports freight or people in the region. A battery for running and a battery for power transport which can be charged with electricity and discharge electricity are installed in the electric vehicle. The electric vehicle charges the battery for power transport in one of the grids that has power to spare, and discharges the battery for power transport in one of the grids that is having difficulty in supplying demanded electricity, to thereby adjust power supply and demand for power between the grids. The battery for power transport and the battery for running may be one same battery or separate batteries. A battery capable of rapid charging is preferred as a battery installed in the electric vehicle, but a battery only capable of normal charging or a battery that can be replaced easily in a short time may be installed.

The electric vehicle is preferred to be a type of electric vehicle that runs on charged electricity, but may be a vehicle that runs on an internal combustion engine or on energy from a fuel battery. In this case, the grids provide power to be transported between the grids to the electric vehicle, without providing power for running. The battery for power transport may be omitted from the electric vehicle. In this case, the grids do not provide power to be transported between the grids to the electric vehicle, and power supply and demand for power is adjusted in places that provide power for running.

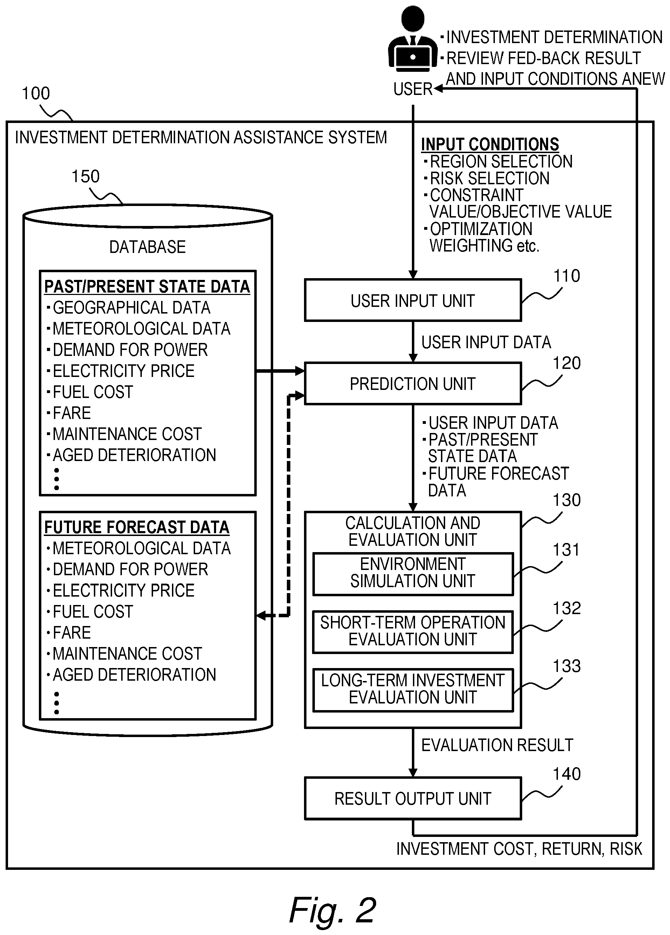

FIG. 2 is a block diagram for illustrating a logical configuration of the investment determination assistance system 100 according to the at least one embodiment.

The investment determination assistance system 100 includes a user input unit 110, a prediction unit 120, a calculation and evaluation unit 130, a result output unit 140, and a database 150.

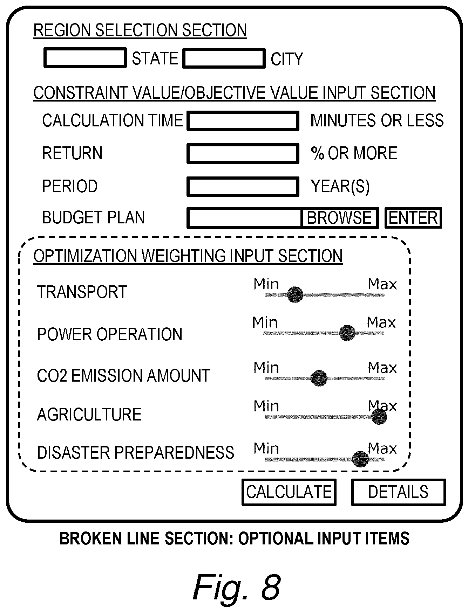

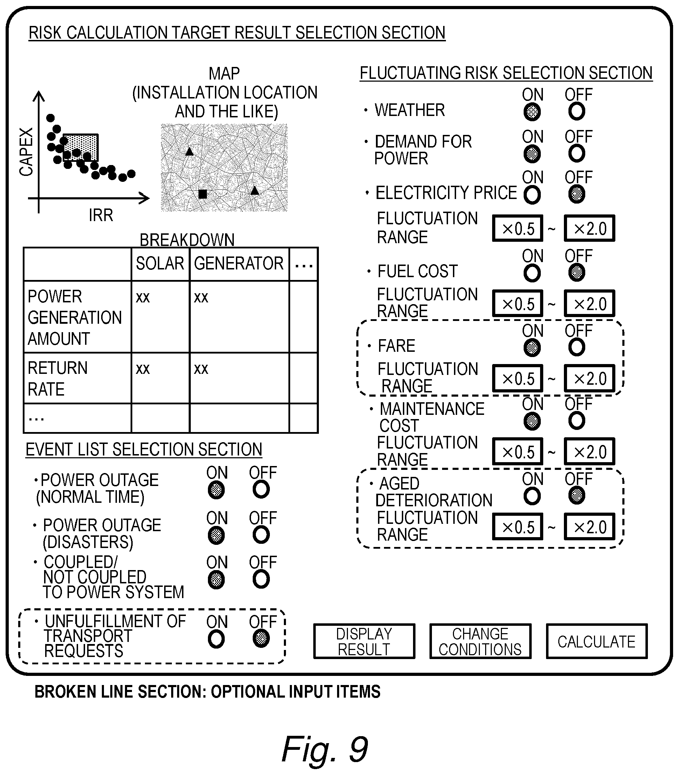

The user input unit 110 receives data input from a user. Data input for simulation includes, as illustrated in FIG. 8 and FIG. 9, selection of a region that is a simulation target, risk options, a constraint value and an objective value in simulation, optimization weighting factors, and the like. The constraint value and the objective value in simulation are a constraint value of an investment cost and an objective value of a return. The optimization weighting factors are indices representing items on which importance is placed in short-term operation evaluation and long-term investment evaluation.

The prediction unit 120 gets past/present state data from the database 150 and generates future forecast data, based on conditions input by the user. In the generation of the future forecast data, already created future forecast data may be read out of the database 150, or prediction data may be got from outside (for example, a weather forecast website). The prediction unit 120 then outputs the data input by the user, the past/present state data got from the database 150, and the generated future forecast data to the calculation and evaluation unit 130.

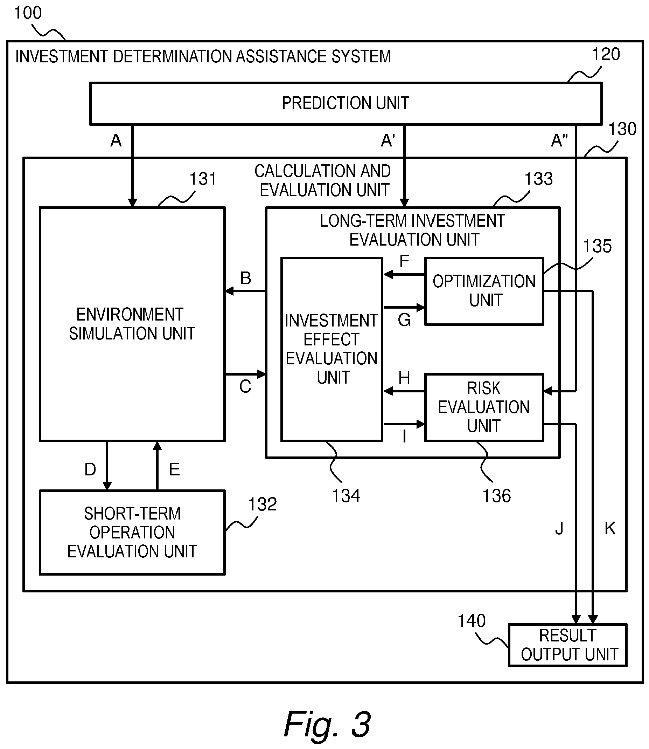

The calculation and evaluation unit 130 uses the data output from the prediction unit 120 to evaluate investment effects and investment risks, and outputs results of the evaluation. A detailed configuration of the calculation and evaluation unit 130 is described with reference to FIG. 3.

The result output unit 140 presents to the user an investment cost, investment effects (returns), and investment risks that are results of the evaluation by the calculation and evaluation unit 130. The user refers to information output from the investment determination assistance system 100 to make a decision about investment, or request further simulation of investment effects by inputting simulation conditions anew.

The database 150 stores the past/present state data and the future forecast data. The past/present state data is data of each of the grids and surroundings of the grid, and includes, for example, geographical data of the grid and its surroundings, meteorological data of the grid and its surroundings, demand for power in the grid and its surroundings, electricity prices in the grid and in a market (for example, grid-to-grid trade), a fuel cost for power generation in the grid, a fare of the electric vehicle running between the grids, maintenance cost of various types of equipment of the grid, and data about aged deterioration of various types of equipment of the grid. The future forecast data is data calculated by the prediction unit 120 from the past/present state data or the user input data and is predicted data of the grid and its surroundings and data about predicted costs predicted to be required for introduction, maintenance, and operation of the local energy system. The future forecast data includes, for example, meteorological data of the grid and its surroundings, demand for power in the grid and its surroundings, electricity prices in the grid and in a market (for example, grid-to-grid trade), a fuel cost for power generation in the grid, a fare of the electric vehicle between the grids, maintenance cost of various types of equipment of the grid, and data about aged deterioration of various types of equipment of the grid.

FIG. 3 is a block diagram for illustrating a logical configuration of the calculation and evaluation unit 130 in the at least one embodiment.

The calculation and evaluation unit 130 includes an environment simulation unit 131, a short-term operation evaluation unit 132, and a long-term investment evaluation unit 133.

The environment simulation unit 131 uses a model expressing behavior of an environment including the grids to simulate the behavior with regards to daily power generation, power consumption, charging/discharging, requests for transport, the electric vehicle, and the like. The short-term operation evaluation unit 132 optimizes daily power operation based on data received from the environment simulation unit 131. The long-term investment evaluation unit 133 evaluates long-term (for example, a year) power operation of the grids, and derives conditions under which power operation is optimized. The long-term investment evaluation unit 133 includes an investment effect evaluation unit 134, an optimization unit 135, and a risk evaluation unit 136. The investment effect evaluation unit 134 calculates an investment amount (capital expenditures: CAPEX) and an internal rate of return (IRR), which are indices for evaluating investment effects. The optimization unit 135 uses the CAPEX and the IRR calculated by the investment effect evaluation unit 134 to create an investment plan to be proposed to the user. The risk evaluation unit 136 evaluates degrees of risks of the CAPEX and the IRR calculated by the investment effect evaluation unit 134.

Details of operations of the component units of the calculation and evaluation unit 130 are described next.

The environment simulation unit 131 receives, from the prediction unit 120, input of user input data, which is geographical data, meteorological data, demand for power, electricity prices, a fare, a fuel cost, aged deterioration, a region, optimization weighting factors, and the like (A). The environment simulation unit 131 executes simulation with use of the data A input from the prediction unit 120, to thereby calculate parameters (power generation amount, demanded amount, stored electricity amount, externally purchased amount, discarded surplus amount, charged/discharged amount) about power at respective time points, information (when, how many times, and the like) about transport requests, and running information (position, freight, and the like) of the electric vehicle, and outputs the calculated parameters and information to the short-term operation evaluation unit 132 (D). The environment simulation unit 131 also executes simulation with use of the data A input from the prediction unit 120 and output (E) from the short-term operation evaluation unit 132, to thereby calculate power balance, a consumed fuel amount, a power outage count, a power outage period, gainings from transport, a carbon dioxide emission amount, and the number of unfulfilled transport requests, and outputs calculated values thereof to the long-term investment evaluation unit 133 (C). In this manner, the environment simulation unit 131 uses the model expressing behavior of the environment including the grids, the past/present state data, and the future forecast data to simulate moves of the local energy system including the grids and the electric vehicle.

The short-term operation evaluation unit 132 evaluates, from the data (D) input from the environment simulation unit 131 and short-term environmental fluctuation factors (weather, fluctuations in demand for power, and the like), with use of a short-term operation algorithm, daily power operation of the grids in relation to short-term environmental fluctuation factors, and outputs a fuel engine power generation amount instruction, a charging/discharging instruction, a transport instruction, and a power generation suppression instruction that are conditions for optimizing daily power operation (E).

The long-term investment evaluation unit 133 receives, from the prediction unit 120, input of data obtained by adding, to the data (A), the maintenance cost and user input data 1 (for example, a constraint condition regarding budget or the like, and a condition regarding an objective return or the like) (A'), and input of user input data 2 (for example, risk factors to be taken into consideration, an investment plan (a placement location, an introduction amount, and the like) that is a target of risk evaluation) (A"). The long-term investment evaluation unit 133 uses the data (A') input from the prediction unit 120 to output an installation location of equipment and an introduction amount of equipment to the environment simulation unit 131 (B). The long-term investment evaluation unit 133 may use the data (A' and A") input from the prediction unit 120 to output a random seed and an argument (a worst condition, a best condition, or the like) to be used by the environment simulation unit 131 in simulation as well (B). The long-term investment evaluation unit 133 uses the data (A' and A") input from the prediction unit 120 and the data (C) input from the environment simulation unit 131 to output a long-term investment evaluation result (J and K).

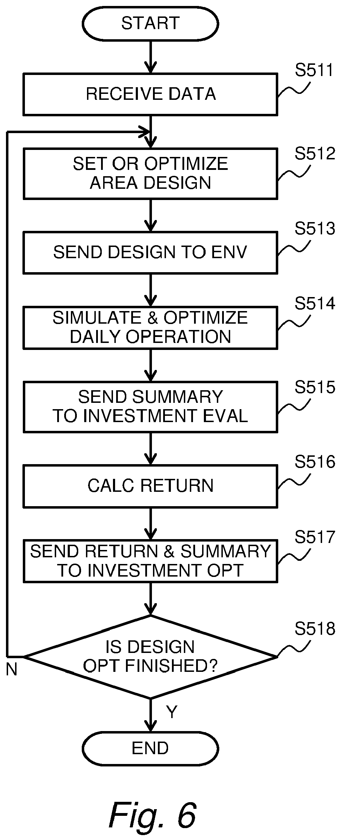

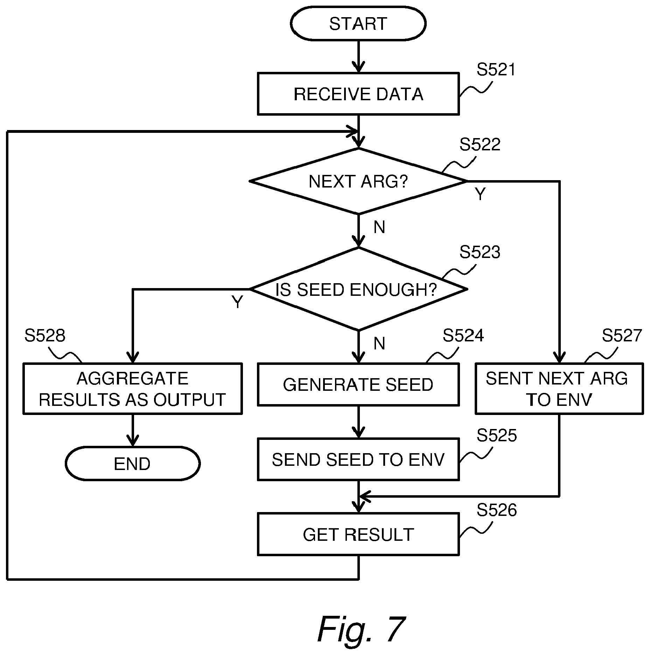

Processing of the component units of the long-term investment evaluation unit 133 is described next. First, the investment effect evaluation unit 134 receives, from the optimization unit 135, input of the installation location of equipment and the introduction amount of equipment (F), and sends the received data to the environment simulation unit 131 (B). The environment simulation unit 131 sends results (for example, power balance, a fuel consumption amount of fuel used to generate power, gainings from transport, a carbon dioxide emission amount, an outage count and period, the number of unfulfilled transport requests, and the like) of simulation based on the received data B to the investment effect evaluation unit 134 (C). The investment effect evaluation unit 134 uses the received data C to evaluate investment effects, and outputs CAPEX, IRR, and simulation results summarized for each evaluation period to the optimization unit 135 (G). The optimization unit 135 determines, based on the received data G, whether to finalize determination on the installation location of equipment and the introduction amount of equipment, or to update/sift, and, in a case of updating, sends an updated installation location of equipment and an updated introduction amount of equipment to the environment simulation unit 131 (B). In a case in which the determination is finalized, the processing is ended and the results are output (K). This processing is described in detail with reference to a flow chart illustrated in FIG. 6. When this processing is ended and the user subsequently selects risk evaluation, the investment effect evaluation unit 134 receives, from the risk evaluation unit 136, the installation location of equipment, the introduction amount of equipment, a random seed, and an argument (a worst condition, a best condition, or the like) (H). The investment effect evaluation unit 134 sends the received data to the environment simulation unit 131 (B). As in the above-mentioned processing, the environment simulation unit 131 sends results (for example, power balance, a fuel consumption amount of fuel used to generate power, gainings from transport, a carbon dioxide emission amount, an outage count and period, the number of unfulfilled transport requests, and the like) of simulation based on the data B to the investment effect evaluation unit 134 (C). The investment effect evaluation unit 134 uses the received data C to evaluate investment effects, and outputs CAPEX, IRR, and simulation results summarized for each evaluation period to the risk evaluation unit 136 (I). The risk evaluation unit 136 determines whether a random seed or an argument for which calculation is to be performed is left, and, when there is a random seed or an argument for which calculation is to be performed, sends the random seed or the argument to the environment simulation unit 131 again (B). When there is no random seed or argument for which calculation is to be performed, the processing is ended and the results are output (J). This processing is described in detail with reference to a flow chart illustrated in FIG. 7.

CAPEX is calculated, for example, as follows.

$$(CAPEX)=(PV\ COST)+(GEN\ COST)+(BAT\ COST)+(EV\ COST)+(SYS\ COST)-(SUB)$$

Terms of the right side thereof are expressed by the following expression.

$$(\text{PV COST}) = \sum_{i=1}^{N_{PV}} C_i^{PV}$$ [=initial investment amount of solar power generation facilities] ($N_{PV}$: total count of solar power generation facilities, $C_i^{PV}$: installation cost of each of solar power generation facilities)

$$(\text{GEN COST}) = \sum_{i=1}^{N_{GEN}} C_i^{GEN}$$ [=initial investment amount of engine power generation equipment] ($N_{GEN}$: total count of pieces of engine power generation equipment, $C_i^{GEN}$: installation cost of each piece of engine power generation equipment)

$$(\text{BAT COST}) = \sum_{i=1}^{N_{BAT}} C_i^{BAT}$$ [=initial investment amount of electricity storage equipment] ($N_{BAT}$: total count of pieces of electricity storage equipment, $C_i^{BAT}$: installation cost of each piece of electricity storage equipment)

$$(\text{EV COST}) = \sum_{i=1}^{N_{EV}} C_i^{EV}$$ [=initial investment amount of electric vehicles] ($N_{EV}$: total count of electric vehicles, $C_i^{EV}$: installation cost of each electric vehicle)

(SYS COST)= initial cost of purchasing an optimization system

(SUB)= subsidy

IRR is calculated by, for example, the following expression.

$$[\text{INI INV COST}] = \sum_{t=1}^{T} \frac{[\text{CASH INFLOW at } t]}{(1+\text{IRR})^t}$$

In the expression given above, [INI INV COST] represents an initial investment amount, and [CASH INFLOW at $t$] is obtained by subtracting a sum of a fuel cost, a maintenance cost, a power purchasing cost, a tax, and the like from a sum of gainings from transport and gainings from power selling in a period $t$, and corresponds to an ultimate profit in the period $t$.

The optimization unit 135 uses the data G input from the investment effect evaluation unit 134 to determine whether to finalize determination on the installation location of equipment and the introduction amount of equipment, or to update/sift, and, in a case of updating, sends an updated installation location of equipment and an updated introduction amount of equipment to the environment simulation unit 131 (B). In a case in which the determination is finalized, the processing is ended, and an optimized proposed investment plan (the installation location of equipment, the introduction amount of equipment, and the like) which is a result is output to the result output unit 140 (K). The optimization unit 135 also outputs the installation location of equipment and the introduction amount of equipment in the optimized simulation results to the investment effect evaluation unit 134 (F).

The risk evaluation unit 136 receives, from the prediction unit 120, user input of risk factors to be considered and an investment plan (a placement location, an introduction amount, and the like) that is a target of risk evaluation (A"), evaluates the risk of the result of simulation executed by the environment simulation unit 131, and outputs, for each risk pertaining to the investment plan, an IRR distribution, a frequency of power outage, a power outage period, and the number of unfulfilled transport requests to the result output unit 140 (J). The risk evaluation unit 136 also outputs the evaluated proposed investment plan (an installation location of equipment, an introduction amount of equipment, and the like) to the investment effect evaluation unit 134 (H). The risk evaluation unit 136 may further output a random seed and an argument (a worst condition, a best condition, or the like) to be used by the environment simulation unit 131 in simulation.

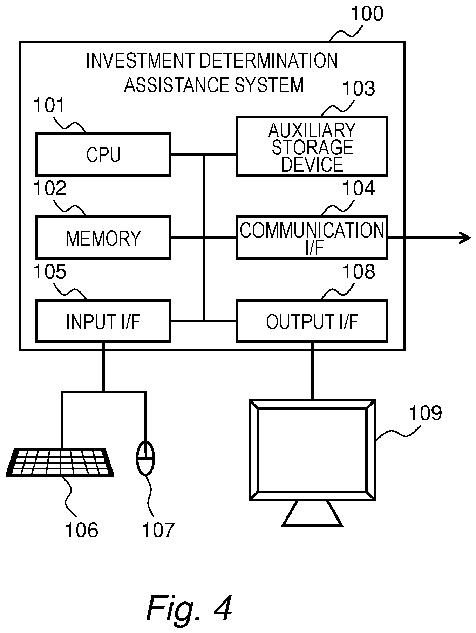

FIG. 4 is a diagram for illustrating a physical configuration of the investment determination assistance system 100 according to the at least one embodiment.

The investment determination assistance system 100 according to the at least one embodiment is configured from a computer including a processor (CPU) 101, a memory 102, an auxiliary storage device 103, and a communication interface 104.

The processor 101 executes a program stored in the memory 102. Part of processing executed by the processor 101 by running the program may be executed by another arithmetic device (for example, an arithmetic device built from hardware such as an FPGA or an ASIC).

The memory 102 includes a ROM, which is a non-volatile storage element, and a RAM, which is a volatile storage element. The ROM stores an unchanging program (for example, BIOS) among others. The RAM is a high-speed and volatile storage element such as a dynamic random access memory (DRAM), and temporarily stores a program executed by the processor 101 and data used in the execution of the program.

The auxiliary storage device 103 is, for example, a large-capacity and non-volatile storage device such as a magnetic storage device (an HDD) or a flash memory (an SSD), and stores a program executed by the processor 101 and data used in the execution of the program. Specifically, the program is read out of the auxiliary storage device 103, loaded onto the memory 102, and executed by the processor 101.

The communication interface 104 is a network interface device for controlling communication to and from other devices (the power control devices in the grids and the like) by following a predetermined protocol.

The investment determination assistance system 100 may include an input interface 105 and an output interface 108. The input interface 105 is an interface to which input devices such as a keyboard 106 and a mouse 107 are coupled to receive input from an operator. The output interface 108 is an interface to which output devices such as a display device 109 and a printer are coupled to output a result of executing a program in a format visually recognizable to the operator. The input interface 105 and the output interface 108 may be provided by a terminal coupled to the investment determination assistance system 100 via a network.

A program executed by the processor 101 is provided to the investment determination assistance system 100 via a removable medium (a CD-ROM, a flash memory, or the like) or a network, and is stored in the non-volatile auxiliary storage device 103, which is a non-transitory storage medium. It is accordingly preferred for the investment determination assistance system 100 to include an interface for reading data out of a removable medium.

The investment determination assistance system 100 is a computer system configured on a single physical computer, or on a plurality of logically or physically configured computers, and may operate in a single thread or a plurality of threads on the same computer, or may operate on a virtual machine built on a plurality of physical computer resources. Component units of the investment determination assistance system 100 may operate on different computers.

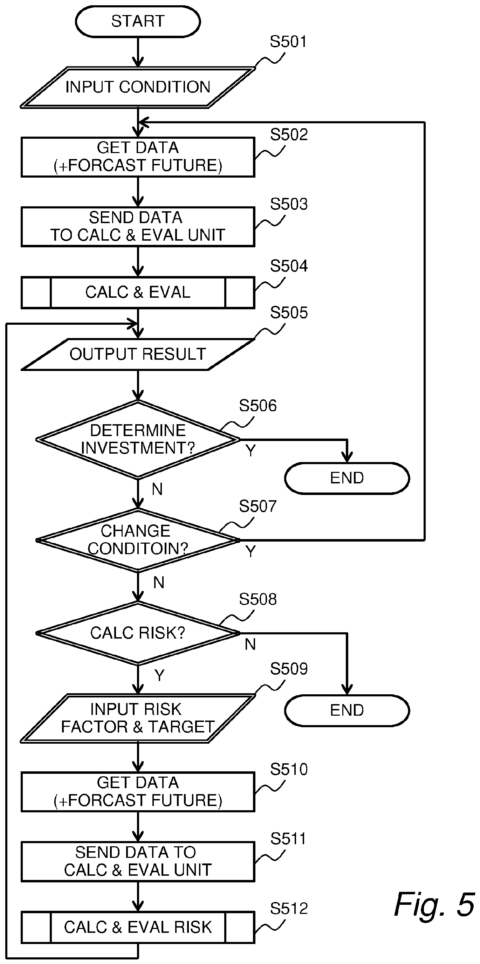

FIG. 5 is a flow chart of energy system investment determination assistance processing executed by the investment determination assistance system 100 according to the at least one embodiment.

The user input unit 110 sends evaluation conditions (the user input data) input from the user to the prediction unit 120 (Step S501). The prediction unit 120 gets the past/present state data from the database 150 (Step S502), generates future forecast data with use of the got data and the user input data, and sends the future forecast data to the calculation and evaluation unit 130 (Step S503). The prediction unit 120 may get future forecast data calculated in the past from the database 150 to send the future forecast to the calculation and evaluation unit 130, or may get data from the outside (a weather forecast or the like).

The calculation and evaluation unit 130 uses the data sent from the prediction unit 120 to evaluate investment effects, and outputs results of the evaluation to the result output unit 140 (Step S504). Details of the processing executed by the calculation and evaluation unit 130 are described with reference to FIG. 6.

In simulation executed by the environment simulation unit 131, a plurality of evaluation indices have trade-off relationships. For instance, when a transport service value improves, a power supply value drops, and, when the power supply value improves, the transport service value drops. This is because, for example, power consumption increases when the transport service value is improved by running more electric buses or electric taxis and thus shortening a waiting time, or by increasing transport velocity. The short-term operation evaluation unit 132 and the long-term investment evaluation unit 133 optimize daily operation and a long-term investment plan, respectively, based on evaluation values which are obtained by weighting those indices with weights input by the user.

The result output unit 140 presents an investment cost and investment effects (returns) that are results of the evaluation by the calculation and evaluation unit 130 to the user (Step S505).

The user then refers to the investment effects and the investment risks to determine whether to make the capital investment (Step S506). When the user intends to further continue evaluation for determination about capital investment, conditions of simulation are changed (Step S507), and the process returns to Step S502 to repeat simulation. When wishing to evaluate investment risks without changing conditions of simulation (Y in Step S508), on the other hand, the user inputs risk factors to be taken into consideration and an investment plan (a placement location, an introduction amount, and the like) that is a target of risk evaluation (Step S509).

The prediction unit 120 gets the past/present state data from the database 150 (Step S510), uses the got data and the user input data to generate future forecast data, and sends the future forecast data to the calculation and evaluation unit 130 (Step S511). The prediction unit 120 may get future forecast data calculated in the past from the database 150 to send the future forecast data to the calculation and evaluation unit 130, or may get data from the outside (a weather forecast or the like).

The calculation and evaluation unit 130 uses the data sent from the prediction unit 120 to evaluate investment effects and investment risks, and outputs results of the evaluation to the result output unit 140 (Step S512). Details of processing of the risk evaluation executed by the calculation and evaluation unit 130 are described with reference to FIG. 7. The process then returns to Step S505, and the result output unit 140 presents an investment cost, investment effects (returns), and investment risks that are results of the evaluation by the calculation and evaluation unit 130 to the user (Step S505).

FIG. 6 is a flow chart of calculation and evaluation processing executed by the calculation and evaluation unit 130.

First, the calculation and evaluation unit 130 receives the user input data, the past/present state data, and the future forecast data from the prediction unit 120 (Step S511). The calculation and evaluation unit 130 then executes initial setting of the investment plan (a placement location, an introduction amount, and the like) (Step S512). In a case of second-time execution or subsequent execution (processing executed as a result of returning from Step S518 due to the answer being "N"), updating of the investment plan (a placement location, an introduction amount, and the like) and extraction and selection of an investment plan that satisfies an objective value and a constraint value specified by the user are executed based on the CAPEX, the IRR, and the simulation results for each evaluation period that have been obtained in Step S517 (Step S512). The investment plan (a placement location, an introduction amount, and the like) set with initial settings or updated is then sent to the environment simulation unit 131 (Step S513). The environment simulation unit 131 uses the model representing behavior of the environment, to simulate the behavior with regards to daily power generation, power consumption, charging/discharging, requests for transport, the electric vehicle, and the like, based on the data received from the prediction unit 120.

The short-term operation evaluation unit 132 then uses results of the simulation by the environment simulation unit 131 to optimize daily power operation of the grids and a transport plan (Step S514). The optimized power operation and transport plan are output to the long-term investment evaluation unit 133 (Step S515).

The investment effect evaluation unit 134 evaluates investment effects (returns) gained by investment, outputs CAPEX, IRR, and simulation results for each evaluation period (Step S516), and sends the output to the optimization unit 135 (Step S517).

The calculation and evaluation unit 130 then determines whether to finish optimization evaluation processing (Step S518). To determine whether to finish the optimization evaluation processing, whether a range of a calculation time specified by the user is exceeded, whether the objective value specified by the user is reached, whether the number of solutions (placement candidates) that satisfy a reference value calculated based on the objective value exceeds a number specified by the user, and the like can be used.

FIG. 7 is a flow chart of processing executed by the risk evaluation unit 136.

The risk evaluation unit 136 receives, from the prediction unit 120, the user input including risk factors to be considered and an investment plan (a placement location, an introduction amount, and the like) that is a target of risk evaluation (Step S521), and determines whether there is an argument to be used in the next evaluation (the argument to be used next is a condition for which risk evaluation has not been executed, out of evaluation conditions (for example, a worst condition and a best condition with regards to the fuel cost or the electricity price) input by the user) (Step S522). When there is an argument to be used next, the risk evaluation unit 136 sends the next argument to the environment simulation unit 131 (Step S527).

When there is no argument to be used next, on the other hand, whether the random seed is enough is determined (Step S523). Examples of methods adoptable for Step S523 include a method of determining whether a confidence interval of population variance of IRR is contained within a threshold value, a method in which the user directly specifies a sampling count, and a method in which sampling is executed so as to be completed in a range of a calculation time specified by the user.

When the random seed is enough, a result of the risk evaluation is output (Step

S528). For example, the risk evaluation unit 136 aggregates the CAPEX received from the investment effect evaluation unit 134, IRR for each argument and for each seed, and the power outage count and period, and presents an upper limit value, a lower limit value, distribution, an average value, and the like for each risk factor as output data to the user in Step S505 of FIG. 5.

When the random seed is not enough, on the other hand, the risk evaluation unit 136 generates a new random seed (Step S524), sends the generated random seed to the environment simulation unit 131 (Step S525), and gets simulation results from the environment simulation unit 131 (Step S526).

FIG. 8 and FIG. 9 are each a diagram for illustrating an example of an input screen. FIG. 8 is a diagram for illustrating an input example of simulation conditions at start of simulation, and FIG. 9 is a diagram for illustrating an input example of detailed simulation conditions.

The input screen at the start of simulation includes, as illustrated in FIG. 8, a region selection section, a constraint value/objective value input section, and an optimization weighting input section. The region selection section receives input of a region (an administrative unit identified by a prefecture name and a city name) that is a simulation target. The constraint value/objective value input section receives input of an upper limit value of a calculation time, a lower limit value of a return, a simulation period, and a budget plan. An investment is to be recouped within the simulation period, and the simulation period is accordingly a period for recouping an investment. For the budget plan, it is preferred to design the input screen so as to be capable of receiving input of, for example, a file in which an investment amount of each year is written. The optimization weighting input section is a section for optional input items, and receives input of indices on which importance is placed, such as transport (provide transport at an inexpensive fare), power operation (stable supply of power), the carbon dioxide emission amount, agriculture, and disaster preparedness.

The input screen for detailed simulation conditions includes, as illustrated in FIG. 9, a risk calculation target result selection section, an event risk selection section, and a fluctuating risk selection section.

The risk calculation target result selection section receives selection of an investment candidate for which risks are calculated. Adoptable methods of selection include selection of a range on a graph in which the axes represent CAPEX and IRR, and simulation results are plotted, and selection of a grid on a map. It is preferred to display power generation amounts and profit rates in the selected range that are aggregated for each type of power generation.

The event risk selection section and the fluctuating risk selection section receive selection of risk factors. Risk factors selectable in the event risk selection section are power outage in normal time, power outage in disasters, being coupled/not coupled to a power system, and unfulfillment of transport requests. Risk factors selectable in the fluctuating risk selection section are weather, demand for power, the electricity price, the fuel cost, the maintenance cost, and aged deterioration. Some items (the electricity price, the fuel cost, the maintenance cost, and aged deterioration) of the fluctuating risk selection section are difficult to predict, and the fluctuating risk selection section is accordingly designed so that a fluctuation range assumed by and tolerable for an entity can be specified.

It is recommended for the user to input data in at least the region selection section and the constraint value/objective value input section on the input screen which is illustrated in FIG. 8 at the start of operation to execute simulation once. The user can then input other conditions (items of the constraint value/objective value input section and the optimization weighting input section of FIG. 8 and items of FIG. 9) in view of short-term and long-term evaluation results of the simulation, and thus obtain a proposed investment plan based on simulation results desirable to the user.

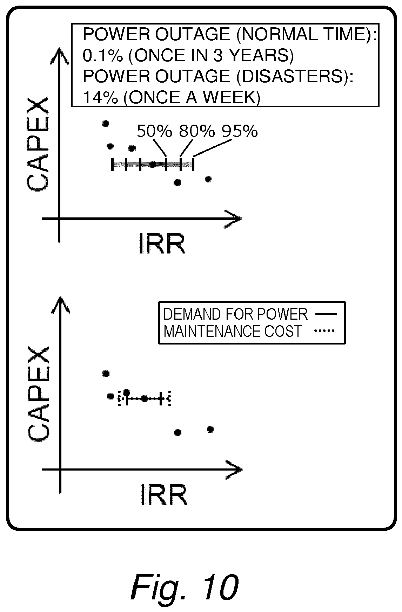

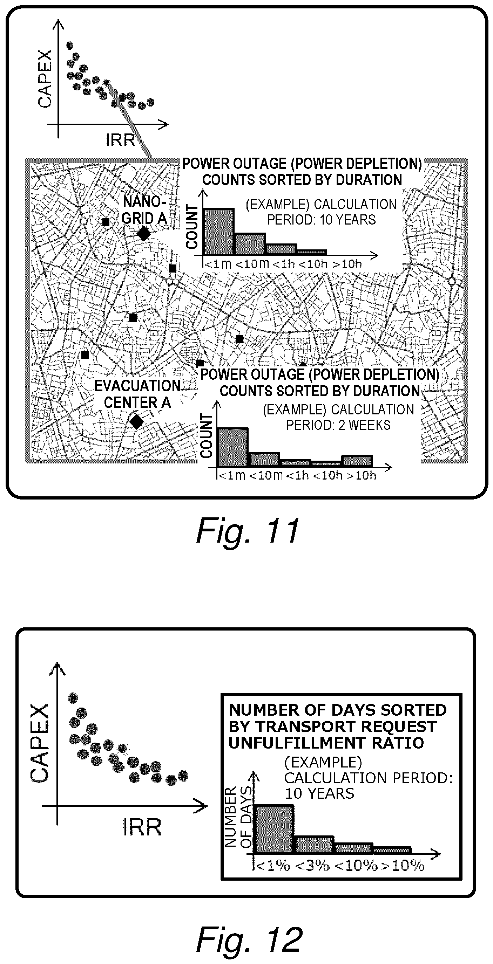

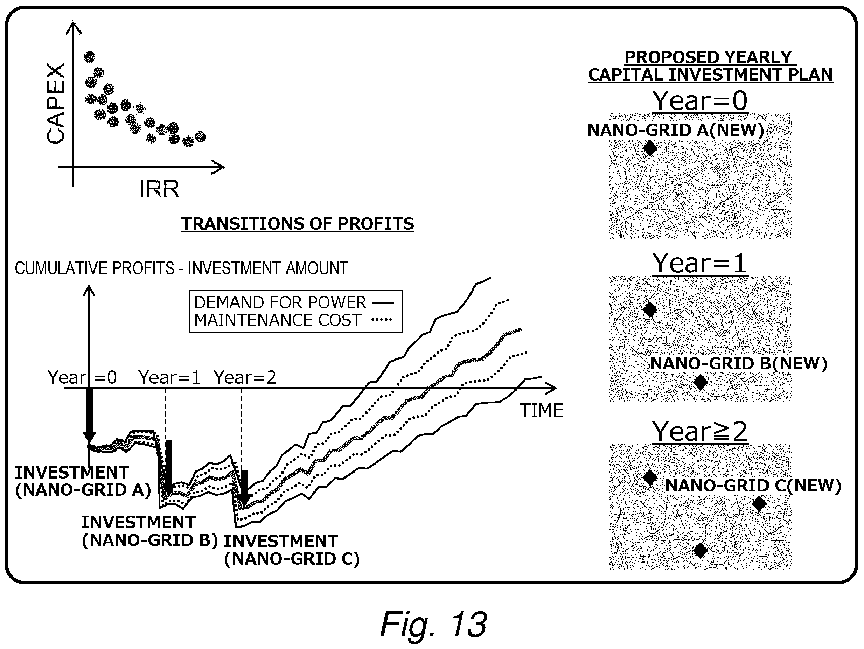

FIG. 10 to FIG. 13 are each a diagram for illustrating an example of an output screen. FIG. 10 is a diagram for illustrating an output example in which risk ranges are displayed. FIG. 11 is a diagram for illustrating an output example in which a power outage risk is displayed. FIG. 12 is a diagram for illustrating an output example in which a transport risk is displayed. FIG. 13 is a diagram for illustrating an output example in which an interim gain and loss risk is displayed.

In the output example in which a risk range is displayed, evaluation results are displayed on a graph that has axes representing IRR and CAPEX as illustrated in FIG. 10. Points in the graph correspond to results of evaluation under different conditions with respect to equipment placement location and introduction amount. When operation of selecting a point in the graph is performed, a probability at which IRR of the corresponding evaluation result is contained within a range is displayed. For example, for weather fluctuations, it is recommended to evaluate the probability at which IRR is contained within a range by Monte Carlo sampling or a similar method, based on a fluctuation distribution of past data and the future forecast data. To give a specific example, the investment effect evaluation unit 134 calculates CAPEX and IRR of each random seed by using, as input, simulation results (received from the environment simulation unit 131) obtained for each random seed in the processing steps of from Step S524 to Step S526 of FIG. 7, and the probability can be evaluated through the aggregation processing of the processing step of Step S528. A power outage frequency in the simulation period (example: the frequency of power outage is 0.1% (once in 3 years) in normal time, and 14% (once a week) in disasters) may be calculated with use of the simulation results received from the environment simulation unit 131, to be displayed along with the probability at which IRR is contained within a range.

A worst value and a best value of IRR in relation to fluctuations of another index may be displayed on the graph that has axes representing IRR and CAPEX. For example, when operation of selecting an evaluation result in the graph is performed, a range between the worst value and the best value of IRR in relation to fluctuations of another index (demand for power, the maintenance cost, or the like) in the evaluation result is displayed. For example, a risk range can be displayed by using a prediction value provided by a research agency or the like, or a trend, with regards to an index difficult to forecast future, such as the electricity price or the fuels cost, or by specifying a tolerable fluctuation range by the user as illustrated in FIG. 9. The risk range can be displayed by, for example, executing calculation of CAPEX and IRR of each argument in the investment effect evaluation unit 134 by using, as arguments, a lower limit value and an upper limit value of a fluctuation range of each index specified by the user in the processing steps of Step S522, Step S527, and Step S526 of FIG. 7, and using the obtained simulation results (received from the environment simulation unit 131) as input.

In the output example in which a power outage risk is displayed, evaluation results are displayed on a graph that has axes representing IRR and CAPEX, under predetermined conditions, as illustrated in FIG. 11, and, when operation of selecting an evaluation result in the graph is performed, installation placement is displayed on the map. When operation of selecting a nano-grid or an evacuation center on the map is further executed, a power outage risk in which power is depleted in the grids or at the evacuation center is displayed in the form of frequency distribution or the like. As in the case of power outage frequency of FIG. 10, a power outage count and a power outage period that are included in the simulation results sent from the environment simulation unit 131 to the long-term investment evaluation unit 133 are displayed by sending the power outage count and the power outage period to the result output unit 140.

In the output example in which a transport risk is displayed, evaluation results are displayed on a graph that has axes representing IRR and CAPEX, under predetermined conditions, as illustrated in FIG. 12, and, when operation of selecting an evaluation result in the graph is performed, prediction results relating to unfulfilled transport risks is displayed. For example, the number of days in which the event may occur is displayed for each ratio of unfulfilled transport requests in the form of frequency distribution. Specifically, the transport risk can be displayed based on the number of unfulfilled transport requests that is included in the simulation results sent from the environment simulation unit 131 to the long-term investment evaluation unit 133.

in the output example in which an interim gain and loss risk is displayed, evaluation results are displayed on a graph that has axes representing IRR and CAPEX, under predetermined conditions, as illustrated in FIG. 13, and, when operation of selecting an evaluation result in the graph is performed, proposed yearly capital investments and yearly transitions of profits are displayed. For example, in a case of a budget plan in which equipment is yearly increased little by little, changes with time of cumulative profits and a fluctuation range thereof can be viewed, and a break-even point from a long-term perspective can accordingly be find out. Specifically, as in "CASH INFLOW at $t$" used in the calculation of IRR, the investment effect evaluation unit 134 calculates a profit at each time point $t$ based on power balance, a consumed fuel amount, and gainings from transport that are sent from the environment simulation unit 131 to the long-term investment evaluation unit 133, and on an electricity price, a fuel cost, a maintenance cost, and the like that are sent from the prediction unit 120 to the long-term investment evaluation unit 133, and outputs results of the calculation to the result output unit 140. Expected values (the heavy solid line in the middle) of the graph of FIG. 13 can thus be displayed. Transitions of demand for power and the maintenance cost in the graph of FIG. 13 can be displayed by, as in the method of displaying the lower section of FIG. 10, executing calculation of CAPEX at each time point and IRR of each argument in the investment effect evaluation unit 134, by using, as arguments, a lower limit value and an upper limit value of a fluctuation range of each index specified by the user, and using the obtained simulation results (received from the environment simulation unit 131) as input. The equipment placement location and the introduction amount of each year can be optimized by the calculation and evaluation unit 130 through the same processing as the processing of the flow chart illustrated in FIG. 6.

According to the investment determination assistance system 100 of the at least one embodiment, the magnitude of a return and the magnitude of a risk can be find out for each equipment placement location and each introduction amount, and material for appropriate investment determination can thus be provided. For example, when a capital investment plan (Plan A) expected to yield a high return has a great risk, a risk of an evaluation result close to the evaluation result of Plan A is investigated, and a capital investment plan (Plan B) that is not so different from Plan A in terms of investment effects but has a small risk is searched for. In this manner, a capital investment plan well balanced between capital investment effect and risk can be selected. In addition, an evaluation result is obtained by setting expected risk factors and fluctuation ranges of the risk factors, and hence risks expected in capital investment can be clarified and a capital investment plan that takes various risks into consideration can be obtained.

This invention is not limited to the above-described embodiments but includes various modifications. The above-described embodiments are explained in details for better understanding of this invention and are not limited to those including all the configurations described above. A part of the configuration of one embodiment may be replaced with that of another embodiment; the configuration of one embodiment may be incorporated to the configuration of another embodiment. A part of the configuration of each embodiment may be added, deleted, or replaced by that of a different configuration.

The above-described configurations, functions, processing modules, and processing means, for all or a part of them, may be implemented by hardware: for example, by designing an integrated circuit, and may be implemented by software, which means that a processor interprets and executes programs providing the functions.

The information of programs, tables, and files to implement the functions may be stored in a storage device such as a memory, a hard disk drive, or an SSD (a Solid State Drive), or a storage medium such as an IC card, or an SD card.

The drawings illustrate control lines and information lines as considered necessary for explanation but do not illustrate all control lines or information lines in the products. It can be considered that almost of all components are actually interconnected.

## Claims

1. An investment determination assistance system for presenting an effect of capital investment in a local energy system,

the investment determination assistance system being configured from a computer including an arithmetic device for executing predetermined arithmetic processing and a storage device coupled to the arithmetic device, the local energy system including one or more grids and a vehicle in which a storage battery is installed, the one or more grids each including at least one of a power generation device or an electricity storage device,

the investment determination assistance system comprising:

an input unit implemented by the arithmetic device and configured to present choices of risk factors to be considered in a forecast to a user, and receive, from the user, selection of risk factors out of the presented risk factors and setting of an expected fluctuation range for each risk factor forming a part of the selected risk factors;

a prediction unit implemented by the arithmetic device and configured to generate future forecast data by using, as input, past/present state data, the risk factors selected by the user, and the setting of the expected fluctuation range for each risk factor, the past/present state data including data of the one or more grids and surroundings of the one or more grids, and data about costs required for introduction, maintenance, and operation of the local energy system, the future forecast data including predicted data of the one or more grids and the surroundings of the one or more grids, and data about predicted costs predicted to be required for introduction, maintenance, and operation of the local energy system;

an environment simulation unit implemented by the arithmetic device and configured to simulate moves of the local energy system with use of a model representing behavior of an environment including the one or more grids, the past/present state data, and the future forecast data;

a short-term operation evaluation unit implemented by the arithmetic device and configured to calculate a method of operating the one or more grids for optimizing daily power operation, by using output from the environment simulation unit as input, and by using a short-term operation algorithm; and

a long-term investment evaluation unit implemented by the arithmetic device and configured to output, with use of output from the prediction unit and the output from the environment simulation unit, a long-term investment evaluation result including an effect and a risk of investment for installing equipment in the one or more grids,

wherein the long-term investment evaluation unit implemented by the arithmetic device is configured to:

calculate the risk of the investment based on the risk factors selected by the user and the setting of the expected fluctuation range for at least one of the selected risk factors; and

generate, based on the calculated risk, data for displaying a fluctuation range of the effect of the investment.

2. An investment determination assistance system for presenting an effect of capital investment in a local energy system,

the investment determination assistance system being configured from a computer including an arithmetic device for executing predetermined arithmetic processing and a storage device coupled to the arithmetic device, the local energy system including one or more grids each including at least one of a power generation device or an electricity storage device,

the investment determination assistance system comprising:

an input unit implemented by the arithmetic device and configured to present choices of risk factors to be considered in a forecast to a user, and receive, from the user, selection of risk factors out of the presented risk factors and setting of an expected fluctuation range for each risk factor forming a part of the selected risk factors;

a prediction unit implemented by the arithmetic device and configured to generate future forecast data by using, as input, past/present state data, the risk factors selected by the user, and the setting of the expected fluctuation range for each risk factor, the past/present state data including data of the one or more grids and surroundings of the one or more grids, and data about costs required for introduction, maintenance, and operation of the local energy system, the future forecast data including predicted data of the one or more grids and the surroundings of the one or more grids, and data about predicted costs predicted to be required for introduction, maintenance, and operation of the local energy system;

an environment simulation unit implemented by the arithmetic device and configured to simulate moves of the local energy system with use of a model representing behavior of an environment including the one or more grids, the past/present state data, and the future forecast data;

a short-term operation evaluation unit implemented by the arithmetic device and configured to calculate a method of operating the one or more grids for optimizing daily power operation, by using output from the environment simulation unit as input, and by using a short-term operation algorithm; and

a long-term investment evaluation unit implemented by the arithmetic device and configured to output, with use of output from the prediction unit and the output from the environment simulation unit, a long-term investment evaluation result including an effect and a risk of investment for installing equipment in the one or more grids,

wherein the long-term investment evaluation unit implemented by the arithmetic device is configured to:

calculate the risk of the investment based on the risk factors selected by the user and the setting of the expected fluctuation range for at least one of the selected risk factors; and
generate, based on the calculated risk, data for displaying a fluctuation range of the effect of the investment.

3. The investment determination assistance system according to claim 1 or 2, wherein the input unit is configured to receive an investment amount and a range of a return for which the risk is calculated.

4. The investment determination assistance system according to claim 1 or 2, wherein the long-term investment evaluation unit is configured to generate, based on the calculated risk, data for displaying a fluctuation range of a return.

5. The investment determination assistance system according to claim 1 or 2, wherein the long-term investment evaluation unit is configured to generate, based on the calculated risk, data for displaying a frequency of power shortage and a power shortage period.

6. The investment determination assistance system according to claim 1 or 2, wherein the input unit is configured to receive an upper limit value of a time required for risk calculation.

7. The investment determination assistance system according to claim 1 or 2, wherein the input unit is configured to receive a budget plan and an objective value of a return, the budget plan including changes with time of an amount of money of the investment.

8. The investment determination assistance system according to claim 1 or 2, wherein the risk factors include weather fluctuations.

9. An investment determination assistance method of presenting an effect of capital investment in a local energy system by an investment determination assistance system,

the investment determination assistance system being configured from a computer including an arithmetic device for executing predetermined arithmetic processing and a storage device coupled to the arithmetic device, the local energy system including one or more grids and a vehicle in which a storage battery is installed, the one or more grids each including at least one of a power generation device or an electricity storage device, the investment determination assistance method comprising:

an input step of presenting, by the arithmetic device, choices of risk factors to be considered in a forecast to a user, and receiving, from the user, selection of risk factors out of the presented risk factors and setting of an expected fluctuation range for each risk factor forming a part of the selected risk factors;
a prediction step of generating, by the arithmetic device, future forecast data by using, as input, past/present state data, the risk factors selected by the user, and the setting of the expected fluctuation range for each risk factor, the past/present state data including data of the one or more grids and surroundings of the one or more grids, and data about costs required for introduction, maintenance, and operation of the local energy system, the future forecast data including predicted data of the one or more grids and the surroundings of the one or more grids, and data about predicted costs predicted to be required for introduction, maintenance, and operation of the local energy system;
an environment simulation step of simulating, by the arithmetic device, moves of the local energy system with use of a model representing behavior of an environment including the one or more grids, the past/present state data, and the future forecast data;
a short-term operation evaluation step of calculating, by the arithmetic device, a method of operating the one or more grids for optimizing daily power operation, by using output obtained in the environment simulation step as input, and by using a short-term operation algorithm; and
a long-term investment evaluation step of outputting, by the arithmetic device, with use of output obtained in the prediction step and the output obtained in the environment simulation step, a long-term investment evaluation result including an effect and a risk of investment for installing equipment in the one or more grids, wherein the long-term investment evaluation step includes calculating, by the arithmetic device, the risk of the investment based on the risk factors selected by the user and the setting of the expected fluctuation range for at least one of the selected risk factors, and generating, based on the calculated risk, data for displaying a fluctuation range of the effect of the investment.

10. An investment determination assistance method of presenting an effect of capital investment in a local energy system by an investment determination assistance system,

the investment determination assistance system being configured from a computer including an arithmetic device for executing predetermined arithmetic processing and a storage device coupled to the arithmetic device, the local energy system including one or more grids each including at least one of a power generation device or an electricity storage device,
the investment determination assistance method comprising:

an input step of presenting, by the arithmetic device, choices of risk factors to be considered in a forecast to a user, and receiving, from the user, selection of risk factors out of the presented risk factors and setting of an expected fluctuation range for each risk factor forming a part of the selected risk factors;
a prediction step of generating, by the arithmetic device, future forecast data by using, as input, past/present state data, the risk factors selected by the user, and the setting of the expected fluctuation range for each risk factor, the past/present state data including data of the one or more grids and surroundings of the one or more grids, and data about costs required for introduction, maintenance, and operation of the local energy system, the future forecast data including predicted data of the one or more grids and the surroundings of the one or more grids, and data about predicted costs predicted to be required for introduction, maintenance, and operation of the local energy system;
an environment simulation step of simulating, by the arithmetic device, moves of the local energy system with use of a model representing behavior of an environment including the one or more grids, the past/present state data, and the future forecast data;
a short-term operation evaluation step of calculating, by the arithmetic device, a method of operating the one or more grids for optimizing daily power operation, by using output obtained in the environment simulation step as input, and by using a short-term operation algorithm; and
a long-term investment evaluation step of outputting, by the arithmetic device, with use of output obtained in the prediction step and the output obtained in the environment simulation step, a long-term investment evaluation result including an effect and a risk of investment for installing equipment in the one or more grids, wherein the long-term investment evaluation step includes calculating, by the arithmetic device, the risk of the investment based on the risk factors selected by the user and the setting of the expected fluctuation range for at least one of the selected risk factors, and generating, based on the calculated risk, data for displaying a fluctuation range of the effect of the investment.

CONCEPTUAL DIAGRAM 30

STORAGE BATTERY 50kWh
MULTI-FUEL 30kW

STORAGE BATTERY 50kWh
SOLAR POWER GENERATION 10kW

STORAGE BATTERY 100kWh

SOLAR POWER GENERATION 10kW

**COMPONENTS**

- SOLAR POWER GENERATION PANEL
- FUEL ENGINE GENERATOR
- STORAGE BATTERY
- ELECTRICITY CONSUMER
- ELECTRIC VEHICLE (EV)

*Fig. 1*

·INVESTMENT DETERMINATION
·REVIEW FED-BACK RESULT
AND INPUT CONDITIONS ANEW
USER

100

INVESTMENT DETERMINATION ASSISTANCE SYSTEM

**INPUT CONDITIONS**
·REGION SELECTION
·RISK SELECTION
·CONSTRAINT
 VALUE/OBJECTIVE VALUE
·OPTIMIZATION
 WEIGHTING etc.

150

DATABASE

**PAST/PRESENT STATE DATA**
·GEOGRAPHICAL DATA
·METEOROLOGICAL DATA
·DEMAND FOR POWER
·ELECTRICITY PRICE
·FUEL COST
·FARE
·MAINTENANCE COST
·AGED DETERIORATION
⋮

**FUTURE FORECAST DATA**
·METEOROLOGICAL DATA
·DEMAND FOR POWER
·ELECTRICITY PRICE
·FUEL COST
·FARE
·MAINTENANCE COST
·AGED DETERIORATION
⋮

USER INPUT UNIT 110

USER INPUT DATA

PREDICTION UNIT 120

·USER INPUT DATA
·PAST/PRESENT
 STATE DATA
·FUTURE FORECAST
 DATA

CALCULATION AND
EVALUATION UNIT 130

ENVIRONMENT
SIMULATION UNIT 131

SHORT-TERM OPERATION
EVALUATION UNIT 132

LONG-TERM INVESTMENT
EVALUATION UNIT 133

EVALUATION RESULT

RESULT OUTPUT UNIT 140

INVESTMENT COST, RETURN, RISK

*Fig. 2*

100

INVESTMENT DETERMINATION ASSISTANCE SYSTEM

120

PREDICTION UNIT

A                    A'                    A"

130

CALCULATION AND
EVALUATION UNIT

131

ENVIRONMENT
SIMULATION UNIT

133

LONG-TERM INVESTMENT
EVALUATION UNIT

B

INVESTMENT
EFFECT
EVALUATION
UNIT

C

F          OPTIMIZATION
UNIT

G

135

H          RISK
EVALUATION
UNIT

I

134        136

D        E

SHORT-TERM
OPERATION
EVALUATION UNIT

132

J        K

140        RESULT
OUTPUT UNIT

*Fig. 3*

100

INVESTMENT DETERMINATION
ASSISTANCE SYSTEM

101

CPU

103

AUXILIARY
STORAGE
DEVICE

102

MEMORY

104

COMMUNICATION
I/F

105

INPUT I/F

108

OUTPUT I/F

109

106    107

*Fig. 4*

Fig. 5

START

RECEIVE DATA — S511

SET OR OPTIMIZE
AREA DESIGN — S512

SEND DESIGN TO ENV — S513

SIMULATE & OPTIMIZE
DAILY OPERATION — S514

SEND SUMMARY
TO INVESTMENT EVAL — S515

CALC RETURN — S516

SEND RETURN & SUMMARY
TO INVESTMENT OPT — S517

IS DESIGN
OPT FINISHED? — S518

N

Y

END

*Fig. 6*

Fig. 7

Fig. 7

REGION SELECTION SECTION

[_____] STATE [_____] CITY

CONSTRAINT VALUE/OBJECTIVE VALUE INPUT SECTION

CALCULATION TIME [_____] MINUTES OR LESS

RETURN [_____] % OR MORE

PERIOD [_____] YEAR(S)

BUDGET PLAN [_____] [BROWSE] [ENTER]

OPTIMIZATION WEIGHTING INPUT SECTION

TRANSPORT — Min ●———— Max

POWER OPERATION — Min ———●— Max

CO2 EMISSION AMOUNT — Min ——●—— Max

AGRICULTURE — Min ————● Max

DISASTER PREPAREDNESS — Min ————● Max

[CALCULATE] [DETAILS]

**BROKEN LINE SECTION: OPTIONAL INPUT ITEMS**

*Fig. 8*

## RISK CALCULATION TARGET RESULT SELECTION SECTION

**MAP (INSTALLATION LOCATION AND THE LIKE)**

CAPEX / IRR

### BREAKDOWN

|  | SOLAR | GENERATOR | ... |
|---|---|---|---|
| POWER GENERATION AMOUNT | xx | xx | |
| RETURN RATE | xx | xx | |
| ... | | | |

### EVENT LIST SELECTION SECTION

| | ON | OFF |
|---|---|---|
| ·POWER OUTAGE (NORMAL TIME) | ● | ○ |
| · POWER OUTAGE (DISASTERS) | ● | ○ |
| · COUPLED/ NOT COUPLED TO POWER SYSTEM | ● | ○ |
| · UNFULFILLMENT OF TRANSPORT REQUESTS | ○ | ● |

### FLUCTUATING RISK SELECTION SECTION

| | ON | OFF |
|---|---|---|
| · WEATHER | ● | ○ |
| · DEMAND FOR POWER | ● | ○ |
| · ELECTRICITY PRICE | ○ | ● |
| FLUCTUATION RANGE | ×0.5 ~ | ×2.0 |
| · FUEL COST | ○ | ● |
| FLUCTUATION RANGE | ×0.5 ~ | ×2.0 |
| · FARE | ● | ○ |
| FLUCTUATION RANGE | ×0.5 ~ | ×2.0 |
| · MAINTENANCE COST | ● | ○ |
| FLUCTUATION RANGE | ×0.5 ~ | ×2.0 |
| · AGED DETERIORATION | ○ | ● |
| FLUCTUATION RANGE | ×0.5 ~ | ×2.0 |

DISPLAY RESULT    CHANGE CONDITIONS    CALCULATE

**BROKEN LINE SECTION: OPTIONAL INPUT ITEMS**

## Fig. 9

POWER OUTAGE (NORMAL TIME):
0.1% (ONCE IN 3 YEARS)
POWER OUTAGE (DISASTERS):
14% (ONCE A WEEK)

50% 80% 95%

CAPEX

IRR

DEMAND FOR POWER —
MAINTENANCE COST ·····

CAPEX

IRR

*Fig. 10*

*Fig. 11*

*Fig. 12*

Fig. 13

Europäisches
Patentamt

European
Patent Office

Office européen
des brevets

**EUROPEAN SEARCH REPORT**

Application Number

EP 23 15 9361

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2002/194113 A1 (LOF PER-ANDERS K [SE] ET AL) 19 December 2002 (2002-12-19) * figures 1-23 * * paragraph [0028] * * paragraph [0121] * * paragraph [0196] * * paragraph [0197] * * paragraph [0198] * * paragraph [0205] * * claims 1-50 * | 1-10 | INV. G06Q50/00 G06Q50/06 F03D7/02 G06Q10/04 G06Q20/20 G06Q40/00 G06Q40/03 G06Q40/04 |
| A | US 2014/244188 A1 (BAI XIN XIN [CN] ET AL) 28 August 2014 (2014-08-28) * figures 1-8 * * claims 1-20 * | 1-10 | |
| A | US 2015/330365 A1 (DEB DIPANKAR [IN] ET AL) 19 November 2015 (2015-11-19) * figures 1-6 * * claims 1-14 * | 1-10 | |
| A | EP 1 906 353 A1 (GEN ELECTRIC [US]) 2 April 2008 (2008-04-02) * figures 1-2 * | 1-10 | TECHNICAL FIELDS SEARCHED (IPC) G06Q F03D G07G |

The present search report has been drawn up for all claims

| Place of search | Date of completion of the search | Examiner |
|---|---|---|
| Munich | 2 October 2023 | Mennerun, Steeve |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**EP 4 280 149 A1**

## ANNEX TO THE EUROPEAN SEARCH REPORT
## ON EUROPEAN PATENT APPLICATION NO.

EP 23 15 9361

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2023

| Patent document cited in search report | Publication date | Patent family member(s) | Publication date |
|---|---|---|---|
| US 2002194113 A1 | 19-12-2002 | EP 1395931 A1 | 10-03-2004 |
|  |  | US 2002194113 A1 | 19-12-2002 |
|  |  | WO 02103588 A2 | 27-12-2002 |
| US 2014244188 A1 | 28-08-2014 | CN 104021424 A | 03-09-2014 |
|  |  | US 2014244188 A1 | 28-08-2014 |
|  |  | US 2020018289 A1 | 16-01-2020 |
|  |  | US 2022275788 A1 | 01-09-2022 |
| US 2015330365 A1 | 19-11-2015 | NONE |  |
| EP 1906353 A1 | 02-04-2008 | EP 1906353 A1 | 02-04-2008 |
|  |  | US 2008079263 A1 | 03-04-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020194113 A1